# EUROPEAN PATENT APPLICATION

(11) **EP 4 228 320 A1**
(43) Date of publication of application: **16.08.2023**
(21) Application number: 20956781.7
(22) Date of filing: 09.10.2020
(51) Int. Cl.: H04W 36/04, H04W 36/38

(54) **TERMINAL, WIRELESS COMMUNICATION METHOD AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); CHEN, Lan, Beijing 100190 (CN)
(74) Representative: Hoffmann Eitle
(86) International application number: PCT/JP2020/038331
(87) International publication number: WO 2022/074834

(57) **Abstract**

A terminal according to an aspect of the present disclosure includes: a receiving section that receives configurations of a plurality of candidate serving cells that are non-serving cells by higher layer signaling when communicating with one transmission/reception point; and a control section that changes a serving cell to a candidate serving cell indicated by an indication when the indication indicating any of the plurality of candidate serving cells is received. According to an aspect of the present disclosure, high-speed inter-cell mobility can be implemented.

## Description

### Technical Field

The present disclosure relates to a terminal, a radio communication method, and a base station in next-generation mobile communication systems.

### Background Art

In a universal mobile telecommunications system (UMTS) network, specifications of long term evolution (LTE) have been drafted for the purpose of further increasing data rates, providing low latency, and the like (Non Patent Literature 1). Furthermore, the specifications of LTE-Advanced (3GPP Rel. 10 to 14) have been drafted for the purpose of further increasing capacity and advancement of LTE (third generation partnership project (3GPP) release (Rel.) 8 and 9).

Successor systems to LTE (for example, also called 5th generation mobile communication system (5G), 5G+ (plus), 6th generation mobile communication system (6G), New Radio (NR), or 3GPP Rel. 15 and subsequent releases) are also being studied.

In the existing LTE systems (for example, 3GPP Rels. 8 to 14), a user terminal (user equipment (UE)) uses at least one of a UL data channel (for example, physical uplink shared channel (PUSCH)) and a UL control channel (for example, physical uplink control channel (PUCCH)) to transmit uplink control information (UCI).

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

In the NR specifications so far, inter-cell mobility in a case where one transmission/reception point (single TRP) is applied has not been sufficiently studied.

Because multi-TRPs follow a single TRP (cell) framework, even when a plurality of TRPs have different PCIs, a lot of configurations (for example, PDCCH/PDSCH configurations) are the same (common) among the plurality of TRPs. However, configurations of the source serving cell and the target serving cell are different in many points. Therefore, it is difficult to implement high-speed inter-cell mobility unless the configuration of the serving cell is appropriately changed.

Therefore, an object of the present disclosure is to provide a terminal, a radio communication method, and a base station, capable of implementing high-speed inter-cell mobility.

### Solution to Problem

A terminal according to an aspect of the present disclosure includes: a receiving section that receives configurations of a plurality of candidate serving cells that are non-serving cells by higher layer signaling when communicating with one transmission/reception point; and a control section that changes a serving cell to a candidate serving cell indicated by an indication when the indication indicating any of the plurality of candidate serving cells is received.

### Advantageous Effects of Invention

According to an aspect of the present disclosure, high-speed inter-cell mobility can be implemented.

### Brief Description of Drawings

[FIG. 1] Figs. 1A to 1D are diagrams illustrating an example of a multi-TRPs scenario.
[FIG. 2] Fig. 2A is a diagram illustrating an example of an intra-cell TRP. Fig. 2B is a diagram illustrating an example of an inter-TRP.
[FIG. 3] Fig. 3 is a diagram illustrating a first configuration example of RRC.
[FIG. 4] Fig. 4 is a diagram illustrating a second configuration example of the RRC.
[FIG. 5] Fig. 5 is a diagram illustrating a third configuration example of the RRC.
[FIG. 6] Fig. 6 is a diagram illustrating a fourth configuration example of the RRC.
[FIG. 7] Fig. 7 is a diagram illustrating a fifth configuration example of the RRC.
[FIG. 8] Fig. 8 is a diagram illustrating an application example of a single TRP.
[FIG. 9] Fig. 9 is a diagram illustrating an example of multi-TRPs in which different TCI states are set.
[FIG. 10] Fig. 10A is a diagram illustrating an example in which the same serving cell is configured for a plurality of TRPs. Fig. 10B is a diagram illustrating an example of Layer 3 (L3) handover in the related art. Fig. 10C is a diagram illustrating an example of DAPO handover.
[FIG. 11] Fig. 11 is a diagram illustrating an example of a serving cell configuration according to a second embodiment.
[FIG. 12] Fig. 12 is a diagram illustrating an example of a schematic configuration of a radio communication system according to one embodiment.
[FIG. 13] Fig. 13 is a diagram illustrating an example of a configuration of a base station according to one embodiment.
[FIG. 14] Fig. 14 is a diagram illustrating an example of a configuration of a user terminal according to one embodiment.
[FIG. 15] Fig. 15 is a diagram illustrating an example of a hardware configuration of the base station and the user terminal according to one embodiment.

### Description of Embodiments

### (TCI, Spatial Relation, and QCL)

In NR, controlling reception processing (for example, at least one of reception, demapping, demodulation, and decoding) and transmission processing (for example, at least one of transmission, mapping, precoding, modulation, and coding) in a UE of at least one of a signal and a channel (expressed as a signal/channel) based on a transmission configuration indication state (TCI state) is being studied.

The TCI state may represent what is applied to a downlink signal/channel. A state corresponding to the TCI state applied to an uplink signal/channel may be expressed as a spatial relation.

The TCI state is information regarding a quasi-co-location (QCL) of the signal/channel and may also be called a spatial Rx parameter, spatial relation information, or the like. The TCI state may be configured in the UE for each channel or each signal.

The QCL is an indicator indicating a statistical property of the signal/channel. For example, this may mean that, when a certain signal/channel and another signal/channel have a QCL relationship, it may be assumed that at least one of a Doppler shift, a Doppler spread, an average delay, a delay spread, and a spatial parameter (for example, the spatial Rx parameter) is the same (the QCL for at least one of the foregoing) between the plurality of different signals/channels.

Note that the spatial Rx parameter may correspond to a UE reception beam (for example, a reception analog beam), and the beam may be specified based on a spatial QCL. A QCL (or at least one element of the QCL) in the present disclosure is interchangeable with a spatial QCL (sQCL).

A plurality of types of QCL (QCL types) may be defined. For example, parameters (or parameter sets) of four different QCL types A to D that can be assumed to be identical may be provided, and the corresponding parameters (which may be called QCL parameters) are described as follows:
- QCL type A (QCL-A): Doppler shift, Doppler spread, average delay, and delay spread;
- QCL type B (QCL-B): Doppler shift and Doppler spread;
- QCL type C (QCL-C): Doppler shift and average delay; and
- QCL type D (QCL-D): spatial Rx parameter.

It may be called QCL assumption for a UE to assume that a predetermined control resource set (CORESET), channel, or a reference signal has a specific QCL (for example, QCL type D) relationship with another CORESET, another channel, or another reference signal.

Based on a TCI state of the signal/channel or the QCL assumption, the UE may also determine at least one of a transmission beam (Tx beam) and a reception beam (Rx beam) of the corresponding signal/channel.

The TCI state may be, for example, information regarding the QCL of a target channel (in other words, a reference signal (RS) for the corresponding channel) and another signal (for example, another RS) . The TCI state may be configured (indicated) by higher layer signaling, physical layer signaling, or a combination thereof.

In the present disclosure, the higher layer signaling may be any of, for example, radio resource control (RRC) signaling, medium access control (MAC) signaling, and broadcast information, or a combination thereof.

For example, a MAC control element (MAC CE) or a MAC protocol data unit (PDU) may be used for the MAC signaling. The broadcast information may be, for example, a master information block (MIB), a system information block (SIB), remaining minimum system information (RMSI), or other system information (OSI).

The physical layer signaling may be, for example, downlink control information (DCI).

A channel for which a TCI state or spatial relation is configured (specified) may be, for example, at least one of a physical downlink shared channel (PDSCH), a physical downlink control channel (PDCCH), a physical uplink shared channel (PUSCH), and a physical uplink control channel (PUCCH).

Furthermore, an RS having a QCL relationship with the channel may be, for example, at least one of a synchronization signal block (SSB), a channel state information reference signal (CSI-RS), a sounding reference signal (SRS), a tracking CSI-RS (also called a tracking reference signal (TRS)), and a QCL detection reference signal (also called a QRS).

The SSB is a signal block including at least one of a primary synchronization signal (PSS), a secondary synchronization signal (SSS), and a broadcast channel (physical broadcast channel (PBCH)). The SSB may be called an SS/PBCH block.

Information element ("TCI-state IE" of the RRC) of the TCI state configured by the higher layer signaling may include one or a plurality of pieces of QCL information ("QCL-Info"). The QCL information may include at least one of information regarding an RS having a QCL relationship (RS relationship information) and information indicating a QCL type (QCL type information). The RS relationship information may include information such as an index of the RS (for example, an SSB index or a non-zero-power (NZP) CSI-RS resource identifier (ID)), an index of a cell where the RS is located, or an index of a bandwidth part (BWP) where the RS is located.

In NR of Rel. 15, both an RS of QCL type A and an RS of QCL type D, or only the RS of QCL type A may be configured for the UE as a TCI state of at least one of the PDCCH and the PDSCH.

In a case where a TRS is configured as the RS of QCL type A, it is assumed that the TRS is different from the demodulation reference signal (DMRS) of the PDCCH or the PDSCH, and the same TRS is periodically transmitted for a long period of time. The UE can measure the TRS and calculate an average delay, a delay spread, and the like.

In the UE for which the TRS is configured as the RS of QCL type A in the TCI state of the DMRS of the PDCCH or the PDSCH, it can be assumed that parameters (the average delay, the delay spread, and the like) of QCL type A are the same between the DMRS of the PDCCH or the PDSCH and the TRS, and thus, the parameters (the average delay, the delay spread, and the like) of type A of the DMRS of the PDCCH or the PDSCH can be obtained from a measurement result of the TRS. When performing channel estimation of at least one of the PDCCH and the PDSCH, the UE can perform channel estimation with higher accuracy by using the measurement result of the TRS.

The UE for which the RS of QCL type D is configured can determine a UE reception beam (spatial domain reception filter, UE spatial domain reception filter) by using the RS of QCL type D.

An RS of QCL type X in a TCI state may mean an RS in a QCL type X relationship with (DMRS of) a certain channel/signal, and this RS may be called a QCL source of the QCL type X in the corresponding TCI state.

### (Multi-TRPs)

In NR, it is considered that one or a plurality of transmission/reception points (TRPs) (multi-TRPs) perform DL transmission to UE by using one or a plurality of panels (multi-panels) . Furthermore, it is considered that the UE performs UL transmission to one or a plurality of TRPs.

Note that the plurality of TRPs may correspond to the same cell identifier (ID) or may correspond to different cell IDs. The corresponding cell ID may be a physical cell ID or a virtual cell ID.

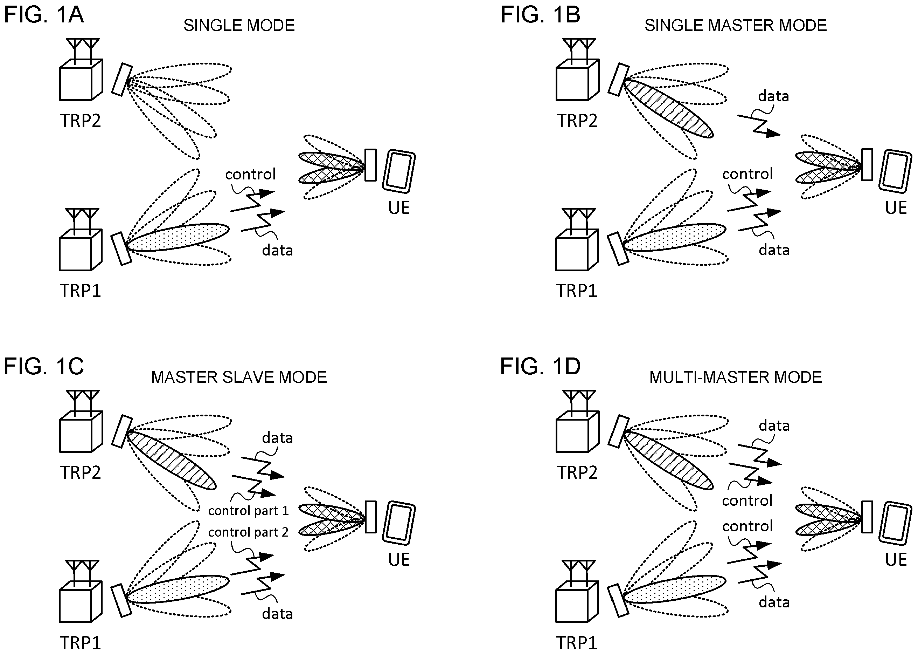

Figs. 1A to 1D are diagrams illustrating one example of a multi-TRPs scenario. In these examples, it is assumed that each TRP is capable of transmitting four different beams, but is not limited to this.

Fig. 1A illustrates one example of a case where only one TRP (TRP1 in this example) of multi-TRPs performs transmission to a UE (which may be called a single mode, a single TRP, and the like). In this case, the TRP1 transmits both a control signal (PDCCH) and a data signal (PDSCH) to the UE.

Fig. 1B illustrates one example of a case where only one TRP (TRP1 in this example) of the multi-TRPs transmits a control signal to the UE and the corresponding multi-TRPs transmit a data signal (which may be called a single master mode). The UE receives each PDSCH transmitted from the multi-TRPs based on one piece of downlink control information (DCI).

Fig. 1C illustrates an example of a case where each of the multi-TRPs transmits a part of a control signal to the UE and the corresponding multi-TRPs transmit a data signal (which may be called a master slave mode). The TRP1 may transmit part 1 of a control signal (DCI), and the TRP2 may transmit part 2 of the control signal (DCI). The part 2 of the control signal may depend on the part 1. The UE receives each PDSCH transmitted from the multi-TRPs based on these parts of the DCI.

Fig. 1D illustrates one example of a case where each of the multi-TRPs transmits separate control signals to the UE and the corresponding multi-TRPs transmit a data signal (which may be called a multi-master mode). A first control signal (DCI) may be transmitted from the TRP1, and a second control signal (DCI) may be transmitted from the TRP2. The UE receives each PDSCH transmitted from the corresponding multi-TRPs based on these DCIs.

When a plurality of PDSCHs (which may be called multiple PDSCHs (multi-PDSCHs)) from the multi-TRPs as illustrated in Fig. 1B are scheduled by using one piece of DCI, the corresponding DCI may be called a single DCI (a single PDCCH). When each of a plurality of PDSCHs from the multi-TRPs as illustrated in Fig. 1D is scheduled by using a plurality of pieces of DCI, the plurality of pieces of DCI may be called multi-DCI (multiple PDCCHs (multi-PDCCHs)).

A different codeword (CW) and a different layer may be transmitted from each TRP of the multi-TRPs. As one form of multi-TRPs transmission, non-coherent joint transmission (NCJT) is considered.

In the NCJT, for example, the TRP1 performs modulation mapping and layer mapping on a first codeword and transmits a first PDSCH by using first precoding in a first number of layers (for example, two layers). Furthermore, the TRP2 performs modulation mapping and layer mapping on a second codeword and transmits a second PDSCH by using second precoding in a second number of layers (for example, two layers).

Note that a plurality of PDSCHs (multiple PDSCHs) subjected to NCJT may be defined as partially or completely overlapping with respect to at least one of a time domain and a frequency domain. That is, the first PDSCH from a first TRP and the second PDSCH from a second TRP may overlap with respect to at least one of a time resource and a frequency resource.

The first PDSCH and the second PDSCH may be assumed not to be in a quasi-co-location (QCL) relationship (not to be quasi-co-located) . Reception of the multi-PDSCHs is interchangeable with simultaneous reception of PDSCHs that are not of a certain QCL type (for example, QCL type D).

In URLLC for the multi-TRPs, support of PDSCH (transport block (TB) or codeword (CW)) repetition across the multi-TRPs has been studied. Support for repetition methods (URLLC schemes, for example, Schemes 1, 2a, 2b, 3, and 4) across the multi-TRPs on a frequency domain, a layer (spatial) domain, or a time domain has been studied. In Scheme 1, multiple PDSCHs from the multi-TRPs are subjected to space division multiplexing (SDM). In Schemes 2a and 2b, PDSCHs from the multi-TRPs are subjected to frequency division multiplexing (FDM). In Scheme 2a, the redundancy version (RV) is the same for the multi-TRPs. In Scheme 2b, the RVs may be the same or different for the multi-TRPs. In Schemes 3 and 4, the multiple PDSCHs from the multi-TRPs are subjected to time division multiplexing (TDM). In Scheme 3, the multiple PDSCHs from the multi-TRPs are transmitted in one slot. In Scheme 4, the multiple PDSCHs from the multi-TRPs are transmitted in different slots.

Such a multi-TRPs scenario can perform more flexible transmission control using a high-quality channel.

In the multi-master mode as illustrated in Fig. 1D, a configuration in which the same physical cell ID is configured for the plurality of TRPs (intra-TRP mobility, intra-cell TRP mobility, intra-cell mobility, or intra-cell multi-TRPs operation) and a configuration in which different physical cell IDs are configured for the plurality of TRPs (Inter-TRP mobility, inter-cell TRP mobility, inter-cell mobility, or inter-cell multi-TRPs operation) are considered.

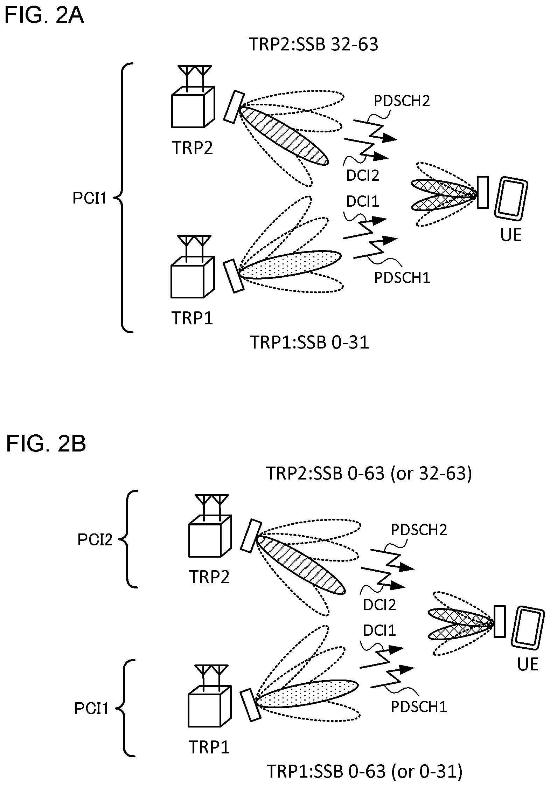

Fig. 2A is a diagram illustrating an example of the intra-cell mobility. As illustrated in Fig. 2A, the same physical cell ID (PCI1) is configured for TRP1 and TRP2. In this case, an SSB (SSBindex) transmitted from the TRP1 and an SSB transmitted from the TRP2 need to be different. In the example of Fig. 2A, the SSB of TRP1 is 0 to 31, and the SSB of TRP2 is 32 to 63.

Fig. 2B is a diagram illustrating an example of inter-cell mobility. As illustrated in Fig. 2B, the different physical cell IDs (PCI1 and PCI2) are configured for the TRP1 and the TRP2. In this case, the SSB (SSBindex) transmitted from the TRP1 and the SSB transmitted from the TRP2 may overlap or may be different. In the example of Fig. 2B, both the SSBs of TRP1 and TRP2 may be 0 to 63. Otherwise, the SSB of TRP1 is 0 to 31, and the SSB of TRP2 is 32 to 63. In this case, the RS in the TCI state of PDSCH1/PDSCH2 is PCI1 or PCI2.

### (QCL Extension)

### <TRP-ID>

When different physical cell IDs are configured for the plurality of TRPs, the UE may receive information relating to a downlink reference signal (DL-RS) from a non-serving cell (second TRP) among the plurality of TRPs by higher layer signaling (RRC) and control transmission of the UL signal based on the information. The information may include, for example, "trp-ToAddModList", "trp-ToReleaseList", "PhysCellId" (physical cell ID), "TRP-ID", and the like to be described below. The "TRP-ID" may be an identifier (ID) of the second TRP.

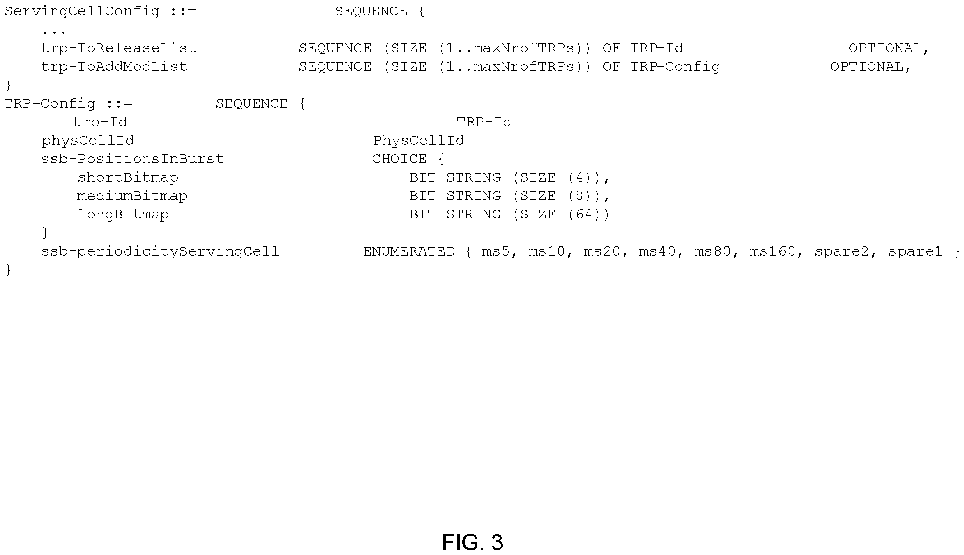

Fig. 3 is a diagram illustrating a first configuration example of the RRC. In the diagram illustrated in Fig. 3, the "ServingCellConfig" which is the RRC parameter includes "trp-ToAddModList" indicating a list of TRPs to be added or changed, "trp-ToReleaseList" indicating a list of TRPs to be released, and the like. In addition, the "TRP-Config" which is the RRC parameter includes "TRP-ID", "physCellId", information relating to the SSB (position of SSB (for example, "ssb-PositionsInBurst"), period of SSB (for example, "ssb-periodicityServingCell"), and the like), and the like.

The "ServingCellConfig" in the present disclosure is interchangeable with "ServingCellConfigCommon". For example, the TRP ID of the serving cell corresponding to "ServingCellConfig" may be 0, and the TRP-ID from 1 with respect to another TRP (additional TRP) may be configured for "trp-Config". The TRP-ID of the second TRP may be 1. Note that, in Fig. 3, the contents ("TRP-ID", "physCellId", information relating to SSB, and the like) of the "TRP-Config" may be included in the portion of the "trp-ToAddModList" in the "ServingCellConfig".

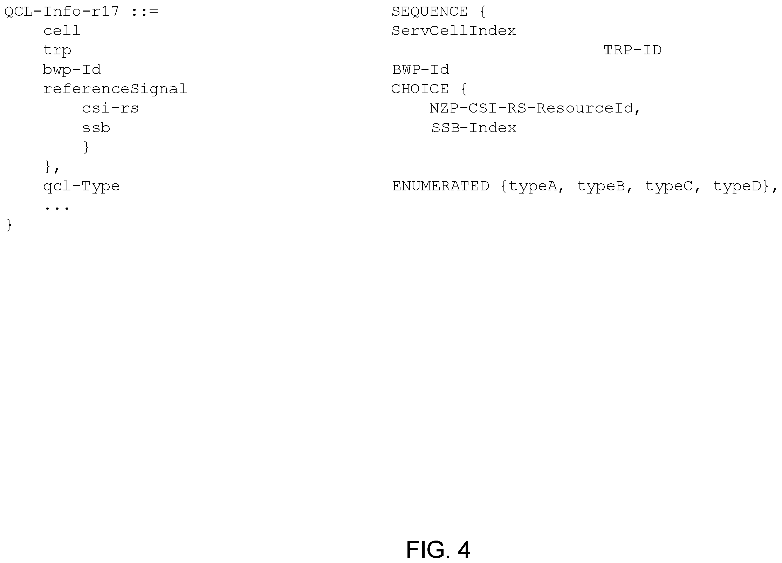

Fig. 4 is a diagram illustrating a second configuration example of the RRC. In the diagram illustrated in Fig. 4, "trp" ("TRP-ID") and the like are included in "QCL-Info-r17" which is the RRC parameter relating to the QCL information. In the present disclosure, "QCL-Info-r17" is interchangeable with "QCL-Info" or "SpatialRelationInfo". In the present disclosure, "r17" indicates 3GPP Rel. 17 but may be other names indicating other releases other than Rel. 15/16. The configuration of the QCL indicated by "QCL-Info-r17" may correspond to each TRP (each TRP ID) of the serving cell. The UE may determine that when the received "TRP-ID" is 0, it means the original (own) serving cell.

The RS transmitted from the added TRP may be a source RS of the QCL/spatial relation information. The "QCL-Info-r17" may be configured for all the BWPs of the serving cell. Then, in "ServingCellConfig", information relating to the plurality of TRPs may be set.

According to the above processing, even when different physical cell IDs are configured for the plurality of TRPs, the UE can perform appropriate communication by receiving the information relating to the TRP of the serving cell.

### <SSB and Physical Cell ID>

The UE may receive at least one of the information relating to the SSB (SSB index) of the non-serving cell (second TRP) and the physical cell ID used for configuring the TCI state/spatial relation information. The corresponding SSB may be configured as a source RS of the QCL/spatial relation information. At least one of the information relating to the SSB of the non-serving cell (second TRP) and the physical cell ID is an example of the information relating to the downlink reference signal from the second TRP.

The source RS means an RS having a QCL relationship with a channel/signal (which may be called a target channel/RS) whose UL TCI state is configured (specified), and may be, for example, the DL-RS (for example, SSB, CSI-RS, TRS, and the like) or may be a UL-RS (for example, SRS, SRS for beam management, and the like).

Any target RS may be configured with the TCI state of the SSB of the non-serving cell. A limited target RS (for example, only TRS) may be configured with the TCI state of the SSB of the non-serving cell.

The SSB of the non-serving cell may be configured for CSI (L1) measurement/radio link monitoring (RLM))/beam failure detection (BFD) .

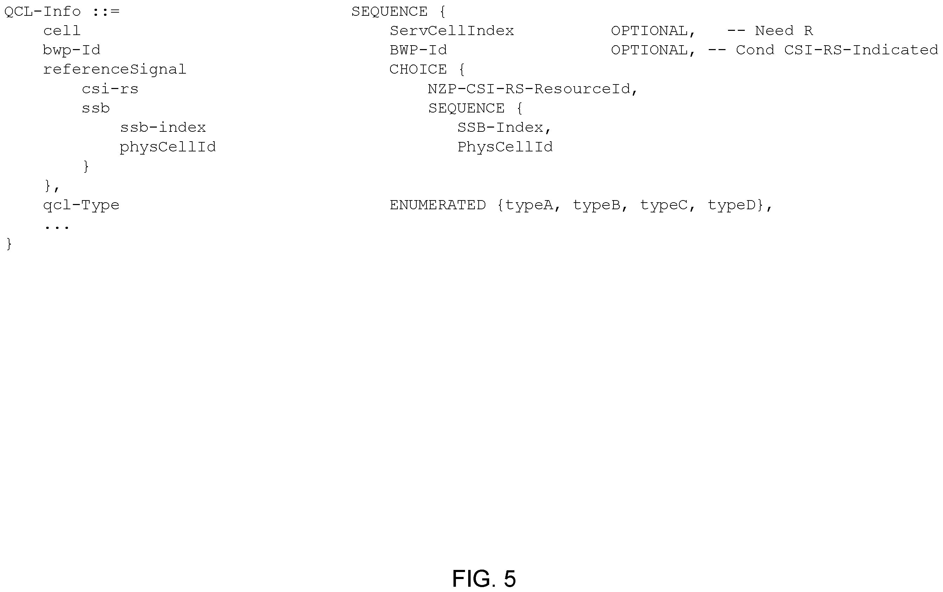

Fig. 5 is a diagram illustrating a third configuration example of the RRC. As illustrated in Fig. 5, the RRC parameter "QCL-Info" includes "ssb-index", "PhysCellId", and the like. The "ssb-index" and the "PhysCellId" are examples of the information relating to the SSB of the non-serving cell and the physical cell ID described above.

The SSB of the non-serving cell may be used to distinguish only the PDCCH/PDSCH from the second TRP. The SSB of the non-serving cell may be used to distinguish only the PDCCH/PDSCH and L1-RSRP/SINR beam reports from the second TRP. The SSB of the non-serving cell may be used to distinguish only PDCCH/PDSCH and L1-RSRP/SINR beam reports and RLM from the second TRP.

Since the multi-TRPs DL transmission is configured for each BWP, the second TRP corresponding to a different BWP may be different in a certain UE. However, since the above "QCL-Info" and "SpatialRelationInfo" are configurations for each BWP, redundant configurations for each cell are not necessary, and thus the configurations can be efficiently performed.

### <NZP-CSI-RS>

The UE may receive at least one of a scrambling identifier (ID) and a sequence generation configuration in a non-zero power channel state information reference signal (NZP-CSI-RS) resource configuration of the second TRP through higher layer signaling (RRC). Specifically, in the NZP-CSI-RS resource configuration, the UE configures/indicates a new (a plurality of) scrambling ID(s) or a sequence generation configuration (sequenceGenerationConfig) used for sequence generation of the CSI-RS. The corresponding NZP-CSI-RS resource configuration supports the NZP-CSI-RS of the non-serving cell (second TRP). The corresponding NZP-CSI-RS resource configuration is an example of information relating to a downlink reference signal from the second TRP.

The above new NZP-CSI-RS resource may be the source RS of the TCI state configuration or the Spatial Relation Info (SpatialRelationInfo) configuration. The foregoing new NZP-CSI-RS resource may be configured as a TRS (NZP-CSI-RS resource including TRS information (trs-Info)).

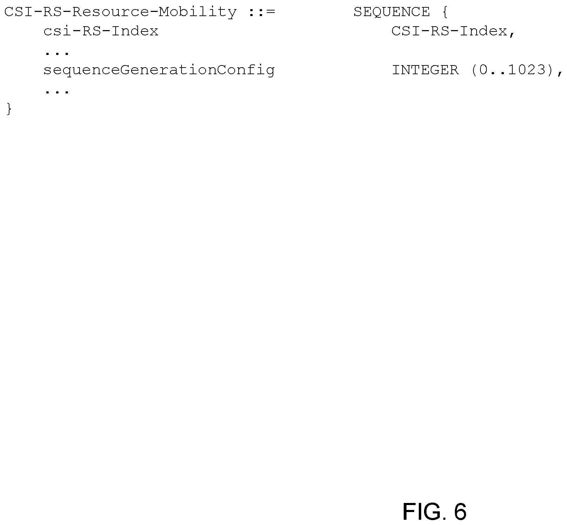

Fig. 6 is a diagram illustrating a fourth configuration example of the RRC. As illustrated in Fig. 6, the RRC parameter "CSI-RS-Resource- Mobility" may include "sequenceGenerationConfig" (sequence generation configuration). The "sequenceGenerationConfig" may be included in other parameters.

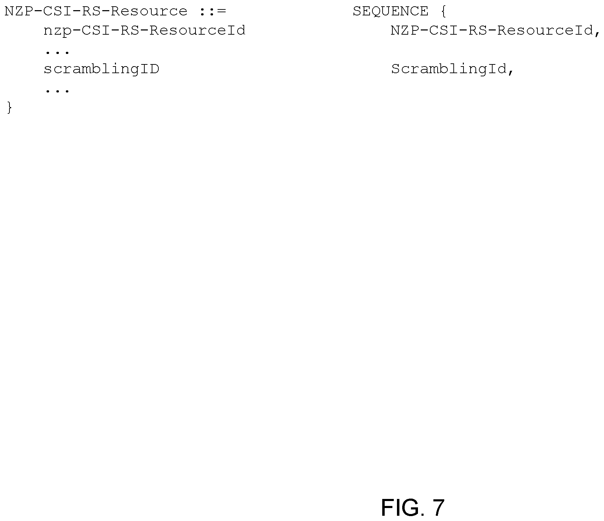

Fig. 7 is a diagram illustrating a fifth configuration example of the RRC. As illustrated in Fig. 7, the RRC parameter "NZP-CSI-RS-Resource" may include "scramblingID" (scrambling ID). The "scramblingID" may be included in other parameters.

The NZP-CSI-RS resource may be mainly applied to at least one of an NZP-CSI-RS resource including TRS information for a QCL indication of other TRPs, an NZP-CSI-RS resource corresponding to L1-RSRP/SINR beam measurement, and an NZP-CSI-RS resource with repetition.

According to the above processing, instead of introduction of the SSB for the non-serving cell, the NZP-CSI-RS for the non-serving cell is configured as the source RS of the QCL, whereby the influence of the specification change can be suppressed. The UE can perform appropriate communication based on the NZP-CSI-RS resource configuration of the non-serving cell.

However, in the NR specifications so far, inter-cell mobility (handover) in a case where the single TRP is applied has not been sufficiently studied.

Because multi-TRPs follow a single TRP (cell) framework, even when a plurality of TRPs have different PCIs, a lot of configurations (for example, PDCCH/PDSCH configurations) are the same (common) among the plurality of TRPs. However, configurations of the source serving cell and the target serving cell are different in many points. Therefore, it is difficult to implement high-speed inter-cell mobility unless the configuration of the serving cell is appropriately changed.

Therefore, the present inventors have conceived a terminal including: a receiving section that receives configurations of a plurality of candidate serving cells that are non-serving cells by higher layer signaling in a case of performing communication with one transmission/reception point; and a control section that changes a serving cell to a candidate serving cell indicated by an indication in a case where the indication indicating any of the plurality of candidate serving cells is received. According to an aspect of the present disclosure, high-speed inter-cell mobility can be implemented.

Hereinafter, embodiments according to the present disclosure are described in detail with reference to the drawings. Radio communication methods according to the respective embodiments may be applied independently or may be applied in combination.

Moreover, in the present disclosure, a panel, an uplink (UL) transmission entity, a TRP, a TRP-ID, a TRP ID, a spatial relation, a control resource set (CORESET), a PDSCH, a codeword, a base station, a predetermined antenna port (for example, demodulation reference signal (DMRS) port), a predetermined antenna port group (for example, DMRS port group), a predetermined group (for example, code division multiplexing (CDM) group, predetermined reference signal group, and CORESET group), a CORESET pool are interchangeable. Further, a panel identifier (ID) and the panel are interchangeable.

In the present disclosure, NCJT, NCJT using multi-TRPs, multi-PDSCHs using NCJT, multi-PDSCHs, a plurality of PDSCHs from the multi-TRPs, and the like are interchangeable. Note that the multi-PDSCH may mean a plurality of PDSCH with which at least a part of time resources (for example, one symbol) overlap, may mean a plurality of PDSCH with which all of the time resources (for example, all symbols) overlap, may mean a plurality of PDSCH with which all of the time resources do not overlap, may mean a plurality of PDSCH carrying the same TB or the same CW, or may mean a plurality of PDSCH to which different UE beams (spatial domain reception filter, QCL parameter) are applied.

In the present disclosure, a cell, a CC, a carrier, a BWP, and a band are interchangeable with each other.

In the present disclosure, an index, an ID, an indicator, and a resource ID are interchangeable.

The TCI state, the TCI state or the QCL assumption, the QCL assumption, the QCL parameter, the spatial domain reception filter, the UE spatial domain reception filter, the spatial domain filter, the UE reception beam, the DL reception beam, the DL precoding, the DL precoder, the DL-RS, the RS of the TCI state or the QCL assumption of QCL type D, and the RS of QCL type A of the TCI state or the QCL assumption are interchangeable. The RS of QCL type D, the DL-RS associated with QCL type D, the DL-RS with QCL type D, the source of the DL-RS, the SSB, and the CSI-RS are interchangeable.

In the present disclosure, the TCI state may be information (for example, a DL-RS, a QCL type, a cell in which a DL-RS is transmitted, and the like) relating to a reception beam (spatial domain reception filter) indicated (configured) for the UE. The QCL assumption may be information (for example, the DL-RS, the QCL type, and the cell to which a DL-RS is transmitted) relating to a reception beam (spatial domain reception filter) assumed by the UE based on transmission or reception of an associated signal (for example, PRACH).

In the present disclosure, the spatial relation, the spatial relation information, the spatial relation assumption, the QCL parameter, the spatial domain transmission filter, the UE spatial domain transmission filter, the spatial domain filter, the UE transmission beam, the UL transmission beam, the UL precoding, the UL precoder, the RS of the spatial relation, the DL-RS, the QCL assumption, the SRI, the spatial relation based on the SRI, and the UL TCI are interchangeable.

In the present disclosure, the TRS, the tracking CSI-RS, the CSI-RS having the TRS information (higher layer parameter trs-Info), and the NZP-CSI-RS resource in the NZP-CSI-RS resource set having the TRS information are interchangeable.

In the present disclosure, DCI format 0_0, DCI including no SRI, DCI including no indication of a spatial relation, and DCI including no CIF are interchangeable. In the present disclosure, DCI format 0_1, DCI including an SRI, DCI including an indication of a spatial relation, and DCI including a CIF are interchangeable.

In the present disclosure, a path loss reference RS, a path loss reference RS, a path loss estimation RS, a path loss calculation RS, path loss (PL)-RS, an index q_{d}, an RS used for path loss calculation, an RS resource used for path loss calculation, and a calculation RS are interchangeable. The calculation, estimation, and measurement are interchangeable.

In the present disclosure, the beam, the spatial domain filter, the spatial setting, the TCI state, the TCI state pool, a plurality of the TCI states, the UL TCI state, the unified TCI state, the unified beam, the common TCI state, the common beam, the TCI assumption, the QCL assumption, the QCL parameter, the spatial domain reception filter, the UE spatial domain reception filter, the UE reception beam, the DL beam, the DL reception beam, the DL precoding, the DL precoder, the DL-RS, the RS of the QCL type D of the TCI state/QCL assumption, the RS of the QCL type A of the TCI state/QCL assumption, the spatial relation, the spatial domain transmission filter, the UE spatial domain transmission filter, the UE transmission beam, the UL beam, the UL transmission beam, the UL precoding, the UL precoder, and the PL-RS are interchangeable. In the present disclosure, a QCL type X-RS, a DL-RS associated with QCL type X, a DL-RS with QCL type X, a DL-RS source, the SSB, the CSI-RS, and the SRS are interchangeable.

In the present disclosure, the standard (normal) TRP, the single TRP, the single TRP system, the single TRP transmission, and the single PDSCH are interchangeable. In the present disclosure, the multi-TRPs, the multi-TRPs system, the multi-TRPs transmission, and the multiple PDSCHs are interchangeable. In the present disclosure, the single DCI, the single PDCCH, the single-DCI-based multi-TRPs, and activation of two TCI states on at least one TCI codepoint are interchangeable.

In the present disclosure, the single TRP, a channel using the single TRP, a channel using one TCI state/spatial relation, the fact that the multi-TRPs are not enabled by the RRC/DCI, the fact that a plurality of TCI states/spatial relations are not enabled by RRC/DCI, the fact that one CORESET pool index (CORESETPoolIndex) value is not configured for any CORESET and any code point in the TCI field is not mapped to two TCI states, the fact of communicating with one transmission/reception point, and the fact of applying the single TRP are interchangeable.

In the present disclosure, the multi-TRPs, a channel using the multi-TRPs, a channel using the plurality of TCI states/spatial relations, the fact that the multi-TRPs are enabled by the RRC/DCI, the fact that the plurality of TCI states/spatial relations are enabled by the RRC/DCI, and at least one of the single-DCI-based multi-TRPs and the multi-DCIs-based multi-TRPs are interchangeable. In the present disclosure, the multi-DCIs-based multi-TRPs and the fact that the CORESET pool index (CORESETPoolIndex) value of 1 is configured for the CORESET are interchangeable. In the present disclosure, the single-DCI-based multi-TRPs and the fact that at least one codepoint of the TCI field is mapped to two TCI states are interchangeable.

Hereinafter, embodiments according to the present disclosure are described in detail with reference to the drawings. Radio communication methods according to the respective embodiments may be applied independently or may be applied in combination. Note that in the present disclosure, "A/B" and "at least one of A and B" are interchangeable.

### (Radio Communication Method)

### <First Embodiment>

When performing communication with one TRP (when a single TRP is applied), the Layer 1/Layer 2 (L1/L2) inter-cell mobility of the UE is configured only for a plurality of cells having almost the same serving cell configurations. For example, L1/L2 inter-cell mobility may be configured when at least one of a PDCCH/PDSCH configuration (DL BWP configuration) and a PUCCH/PUSCH configuration (UL BWP configuration) in a plurality of cells is the same. L1/L2 inter-cell mobility may be configured when configurations other than QCL/PCI/SSB/CSI-RS/SRS configuration are the same.

In this case, the UE does not receive the configuration by the RRC signaling and can perform the inter-cell mobility (handover) according to the indication of the MAC CE/DCI.

Similarly to the multi-TRPs inter-cell mobility, the L1/L2 inter-cell mobility of the present embodiment can be performed by various configurations described in the "QCL extension" described above. That is, the UE does not need to update most of the serving cell configuration.

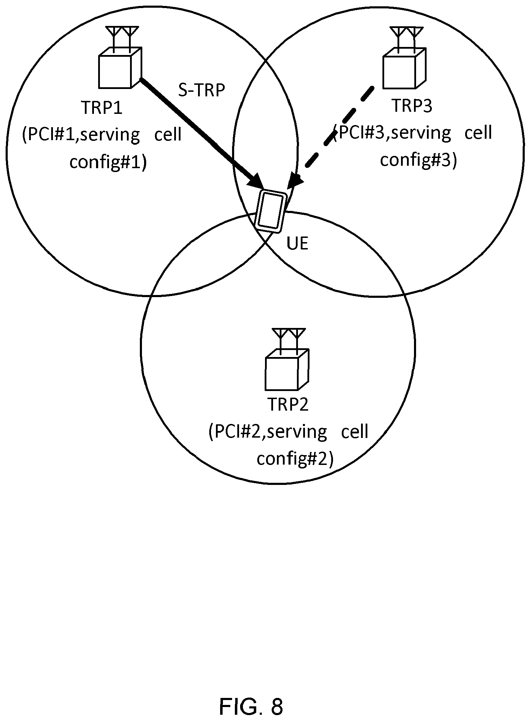

Fig. 8 is a diagram illustrating an application example of the single TRP. In Fig. 8, only one TRP (TRP1) among the multi-TRPs performs transmission to the UE. The serving cell configuration (serving cell config #1) of the TRP1 and the serving cell configuration (serving cell config #3) of the TRP3 are almost the same as described above, and the L1/L2 inter-cell mobility is configured for the TRP1 and the TRP3.

For example, L1/L2 inter-cell mobility may be configured between cells when at least one of the following (1) to (3) is satisfied.
(1) Serving cell configurations between cells are the same.
(2) At least PDCCH/PDSCH configuration is the same among a plurality of cells.
(3) In at least one of the PDCCH/PDSCH/PUCCH/PUSCH configurations, configurations other than the QCL/PCI/SSB/CSI-RS/SRS configurations are the same.

### <Second Embodiment>

When performing communication with one TRP (when a single TRP is applied), the UE receives configurations of a plurality of candidate serving cells that are non-serving cells corresponding to a frequency, by higher layer signaling (RRC reconfiguration signaling) in advance. Then, in a case where the indication indicating any of the plurality of candidate serving cells is received by the MAC CE/DCI, the UE changes (hands over) the serving cell to the candidate serving cell indicated by the indication. The configuration of the candidate serving cell and the candidate serving cell configuration are interchangeable.

An upper limit of the number of candidate serving cell configurations may be set. The upper limit may be a fixed value or may be a variable that is configured by higher layer signaling or the like. The UE receives a serving cell change indication via MAC CE/DCI to enable L1/L2 inter-cell mobility.

When the UE receives a MAC CE/DCI indicating a serving cell change (update), the UE changes to the indicated serving cell with the updated serving cell configuration after a certain period of time. The certain period of time may be X ms/X symbols from indication by MAC CE/DCI. The certain period of time may be Y ms/Y symbols from HARQ-ACK feedback to MAC CE/DCI.

The MAC CE/DCI indicating the serving cell change may include a serving cell index, a PCI, or another ID relating to the serving cell. The UE may determine other fields in the MAC CE/DCI to be an indication relating to serving to be changed.

For example, in the example of Fig. 8, in a case where the second embodiment is applied, a candidate serving cell configuration (serving cell configuration (serving cell config #2) of the TRP2 and the serving cell configuration (serving cell config #3) of the TRP3 are configured for the UE in addition to the serving cell configuration (serving cell config #1) of the TRP1. Then, in a case where the MAC CE/DCI indicating the serving cell change is received, the UE updates the serving cell configuration to the candidate serving cell configuration.

For example, in a case where the MAC CE/DCI indicating the serving cell configuration of the TRP2 is received, the UE changes the serving cell configuration to the serving cell configuration of the TRP2 and changes (hands over) the serving cell to the serving cell of the TRP2.

According to the second embodiment, since the serving cell change (handover) is performed according to the MAC CE/DCI indication by using the previously received candidate serving cell configuration, prompt inter-cell mobility can be implemented.

### <Third Embodiment>

Control in which the first embodiment and the second embodiment are combined may be performed. The UE receives (configures) configurations of a plurality of candidate serving cells that are non-serving cells corresponding to a frequency by higher layer signaling (RRC reconfiguration signaling). Then, in a case where the information (QCL/TCI) relating to the QCL of the non-serving cell is received by the MAC CE or the DCI, the UE changes (hands over) the serving cell to the candidate serving cell corresponding to (associated with) the non-serving cell and applies the QCL. The information relating to QCL is various types of configuration information described in "QCL extension" described above. That is, the "QCL extension" described above may be supported/configured/applied.

For example, when the QCL/TCI relating to the RS of the non-serving cell is indicated by the DCI for the PDSCH, after a certain period of time, the UE may change the serving cell to the corresponding non-serving cell (candidate serving cell) by using the configuration of the candidate serving cell (relating to) corresponding to the corresponding non-serving cell and apply the indicated QCL/TCI. The certain period of time may be the same as that shown in the second embodiment.

For example, when the QCL/TCI relating to the RS of the non-serving cell is activated by the MAC CE for the PDCCH/PDSCH, the UE may change the serving cell to the corresponding non-serving cell (candidate serving cell) by using the configuration of the candidate serving cell corresponding to (relating to) the corresponding non-serving cell and apply the activated QCL/TCI.

Note that all QCL/TCI activated by the MAC CE for PDCCH/PDSCH are preferably associated with the same serving cell. Accordingly, it is possible to prevent the serving cell configuration from being dynamically (frequently) changed.

### <Fourth Embodiment>

The UE may simultaneously apply/maintain/support/retain at least two (a plurality of) candidate serving cell configurations of the plurality of candidate serving cell configurations when the plurality of candidate serving cell configurations corresponding to the frequency are configured. The UE may simultaneously communicate with a plurality of serving cells corresponding to the plurality of candidate serving cell configurations. This is a procedure similar to dual active protocol stack based handover (DAPS HO). That is, the UE applies the candidate serving cell configuration before the change and the candidate serving cell configuration after the change at the same time for a certain period of time at the time of the handover. Then, in a case where the instruction indicating any of the plurality of candidate serving cells is received, the UE changes (hands over) the serving cell to the candidate serving cell indicated by the indication.

An upper limit of the number of configurations (the number of candidate serving cells) may be set. The upper limit may be a fixed value or may be a variable that is configured by higher layer signaling or the like.

The UE may perform the above processing (processing of the fourth embodiment) when different QCL/TCI associated with both the RS of the serving cell and the RS of the non-serving cell are configured/indicated/activated by MAC CE/DCI for PDCCH/PDSCH.

The UE maintains/supports/retains two serving cell configurations with both cells corresponding to the frequency as serving cells. Then, the UE simultaneously receives the DL signals from the two serving cells. Time division multiplexing (TDM) or space division multiplexing (SDM) is used to actually receive the DL signal based on the UE capability. For receiving the different/dynamic PDCCH/PDSCH associated with different cells, the UE uses different serving cell configurations.

### <CORESET #0>

In order to support full inter-cell mobility, it is preferable to enable a QCL change of CORESET #0 (controlResourceSetZero). The QCL, the TCI, the TCI state, and the beam are interchangeable.

The UE may be configured/indicated by the MAC CE to the TCI state of a non-serving cell (the RS from the non-serving cell) for CORESET #0.

In the single TRP operation, the UE may update the configuration of CORESET #0 to the configuration of CORESET #0 (including the configuration of the TCI state) of the new serving cell when a new serving cell having the updated serving cell configuration is indicated.

The QCL of CORESET #0 may be associated with the recent (most recent) PRACH relating to SSB. This is similar to 3GPP Rel. 15. In this case, in the PRACH procedure, the QCL of CORESET #0 on the new serving cell may be updated.

### <UE Capability>

The UE may report at least one of the following (1) to (11) as the UE capability. Application of each embodiment may be limited to a UE that reports at least one of the following (1) to (11) as a UE capability.

(1) Support a plurality of candidate serving cell configurations per frequency for the UE.
(2) Maximum number of a plurality of candidate serving cell configurations per frequency for the UE.
(3) Maximum number of the plurality of candidate serving cell configurations for the UE.
(4) Support serving cell change by MAC CE/DCI.
(5) Support change of the QCL in order to change the serving cell to the non-serving cell having the serving cell configuration for update.
(6) Support maintenance/retention of a plurality of candidate serving cell configurations per frequency for the UE.
(7) Support maintenance/retention of a plurality of serving cell configurations per frequency for the UE.
(8) Maximum number of a plurality of serving cell configurations per frequency for the UE.
(9) Maximum number of a plurality of serving cell configurations for the UE.
(10) Support indication of a plurality of serving cells by RRC signaling/MAC CE.
(11) Support CORESET #0 configuration/QCL update.

### <Others>

Comparison between each of the above embodiments and other techniques, advantages, and the like are described. For example, as described above, in a case where NCJT is supported between TRPs of different PCIs in the multi-TRPs in which the QCL extension is supported, it is possible to switch the S-TRP operation according to the TCI state of the DCI.

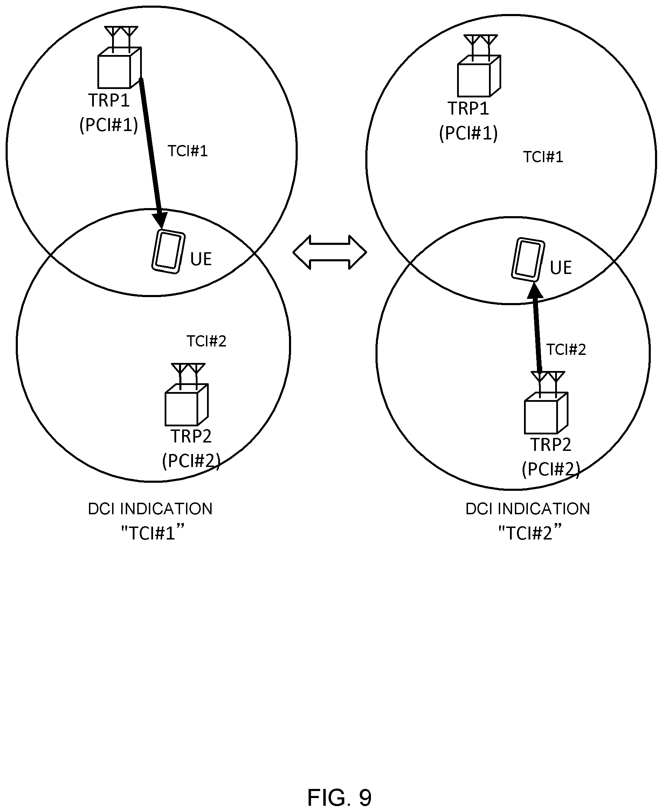

For example, Fig. 9 is a diagram illustrating an example of multi-TRPs handover. In Fig. 9, the handover from the TRP1 to the TRP2 can be performed at high speed by the indication of the TCI state by the DCI (only TCI #1 or only TCI #2). However, in the example of Fig. 9, in order to enable inter-cell mobility for the non-serving cell (PCI #2), it is necessary to configure almost the same serving cell configuration for each TRP.

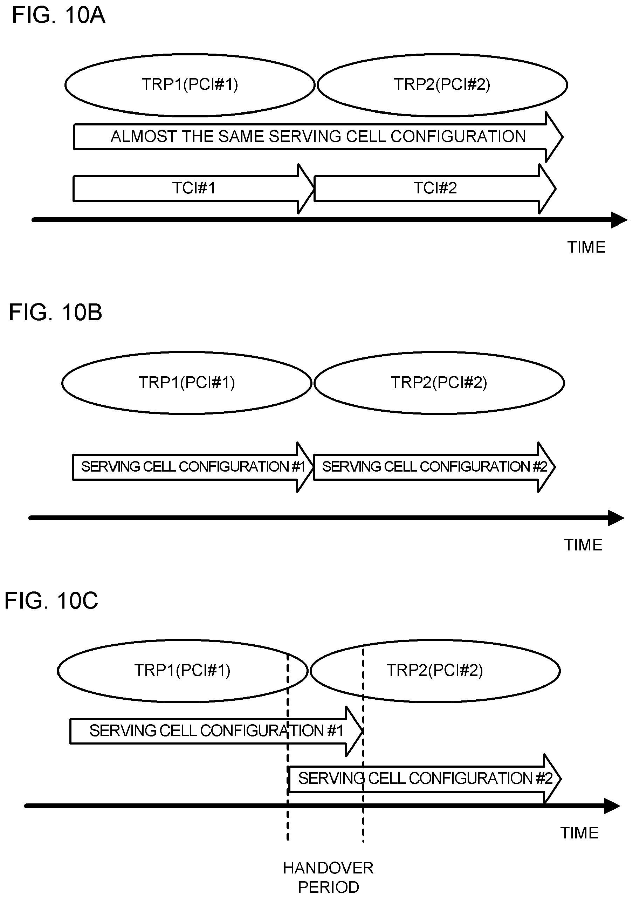

Fig. 10A is a diagram illustrating an example in which the same serving cell is configured for a plurality of TRPs. In this case, RRC signaling is not necessary for changing the serving cell configuration, and for example, a change by MAC CE/DCI is sufficient. Because a difference between the two serving cell configurations is only a TCI state, inter-cell mobility is completed only by updating the TCI state. In Rel. 17, the PCI of the serving cell may be different because the PCI is considered to be included in the TCI state. Fig. 10A corresponds to the first embodiment when a single TRP is applied.

Fig. 10B is a diagram illustrating an example of Layer 3 (L3) handover in the related art. In the example illustrated in Fig. 10B, the UE needs to switch application from serving cell configuration #1 to serving cell configuration #2 by RRC signaling at the time of handover.

Fig. 10C is a diagram illustrating an example of a DAPS HO. In the example illustrated in Fig. 10C, the UE switches application from the serving configuration #1 to the serving configuration #2 by RRC signaling during the handover but maintains both the serving configuration #1 and the serving configuration #2 in a period in which the handover is performed. As described above, in the examples of Figs. 10B and 10C, reconfiguration by RRC signaling is necessary.

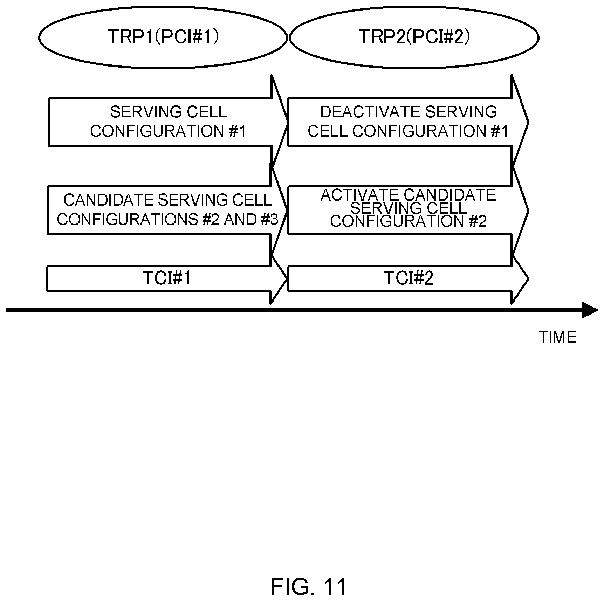

Fig. 11 is a diagram illustrating an example of a serving cell configuration according to the second embodiment. As described above, in the second embodiment, in the configuration of the two serving cells, when the RRC configuration other than the TCI state is different, the UE sets the candidate serving cell configuration in advance by the RRC or the like. In the example illustrated in Fig. 11, it is assumed that candidate serving cell configurations #2 and #3 are configured in advance, in addition to the serving cell configuration #1.

Then, at the time of handover, by applying (activating) any of the candidate serving cell configuration by MAC CE/DCI instead of the RRC reconfiguration, quick L1/L2 inter-cell mobility becomes possible. In the example of Fig. 11, the candidate serving cell configuration #2 is activated, and the UE quickly hands over to the serving cell corresponding to the candidate serving cell configuration #2.

In the second to fourth embodiments, the restriction of the serving cell configuration is small, and the L1/L2 inter-cell mobility by the network (for example, a base station or a gNB,) can be flexibly supported. For example, even when the two serving cell configurations are different (not only in the TCI state), the L1/L2 inter-cell mobility can be quickly performed. In this case, the serving cell change by the PRACH procedure is unnecessary.

### <Modifications>

In the second to fourth embodiments, the frequencies of the plurality of candidate serving cell configurations may be the same or may be the same as that of the current serving cell. Alternatively, the frequency of the plurality of candidate serving cell configurations may be different from that of the current serving cell. That is, inter-frequency mobility may be supported.

The processing of each embodiment may be applied only when Carrier Aggregation (CA) is not applied or may be applied together with CA. When CA is applied, the Pcell and the PScell are changed according to the processing of the embodiment. The configuration of the Scell may be released/deactivated in advance or may not be changed.

### (Radio Communication System)

Hereinafter, a configuration of a radio communication system according to one embodiment of the present disclosure is described. In this radio communication system, communication is performed using any one or a combination of the radio communication methods according to the embodiments of the present disclosure.

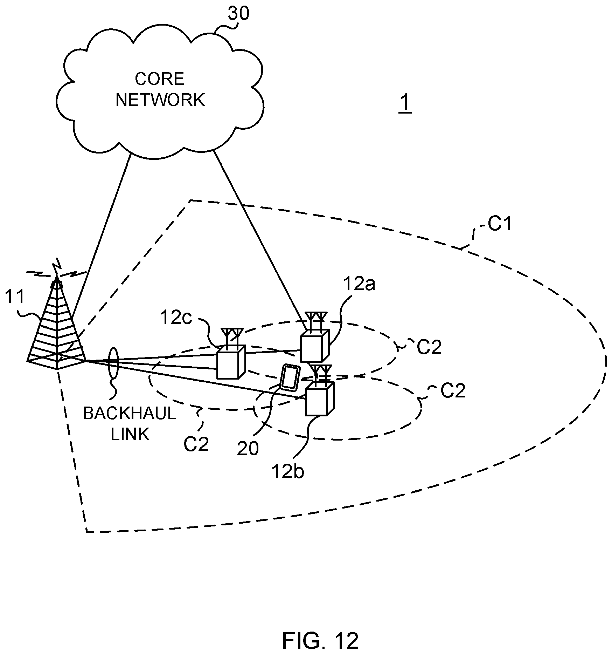

Fig. 12 is a diagram illustrating an example of a schematic configuration of a radio communication system according to one embodiment. A radio communication system 1 may be a system that implements communication using long term evolution (LTE), 5th generation mobile communication system New Radio (5G NR), and the like drafted as the specification by third generation partnership project (3GPP).

Further, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is MN, and an LTE (E-UTRA) base station (eNB) is an SN.

The radio communication system 1 may support dual connectivity between a plurality of base stations in the same RAT (for example, dual connectivity in which both MN and SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are arranged in the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively called a "base station 10", unless these are distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency range (frequency range 1 (FR1)) and a second frequency range (frequency range 2 (FR2)). The macro cell C1 may be included in FR1, and the small cells C2 may be included in FR2. For example, FR1 may be a frequency range of 6 GHz or less (sub-6 GHz), and FR2 may be a frequency range higher than 24 GHz (above-24 GHz). Note that the frequency ranges, definitions, and the like of the FR1 and FR2 are not limited thereto, and, for example, FR1 may correspond to a frequency range higher than FR2.

Further, the user terminal 20 may perform communication on each CC using at least one of time division duplex (TDD) and frequency division duplex (FDD).

The plurality of base stations 10 may be connected to each other in a wired manner (for example, an optical fiber, an X2 interface, or the like in compliance with the common public radio interface (CPRI)) or in a wireless manner (for example, NR communication). For example, when NR communication is used as a backhaul between the base stations 11 and 12, the base station 11 corresponding to a higher-level station may be called an integrated access backhaul (IAB) donor, and the base station 12 corresponding to a relay station (relay) may be called an IAB node.

The base station 10 may be connected to a core network 30 via another base station 10 or directly. The core network 30 may include, for example, at least one of evolved packet core (EPC), 5G core network (5GCN), next generation core (NGC), and the like.

The user terminal 20 may be a terminal corresponding to at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be called a waveform. Note that, in the radio communication system 1, another radio access method (for example, another single carrier transmission method or another multi-carrier transmission method) may be used as the UL and DL radio access methods.

In the radio communication system 1, a downlink shared channel (physical downlink shared channel (PDSCH)) shared by the user terminals 20, a broadcast channel (physical broadcast channel (PBCH)), a downlink control channel (physical downlink control channel (PDCCH)), and the like may be used as downlink channels.

In the radio communication system 1, an uplink shared channel (physical uplink shared channel (PUSCH)) shared by the user terminals 20, an uplink control channel (physical uplink control channel (PUCCH)), a random access channel (physical random access channel (PRACH)), and the like may be used as uplink channels.

User data, higher layer control information, a system information block (SIB), and the like are transmitted on the PDSCH. The PUSCH may transmit the user data, higher layer control information, and the like. Furthermore, the PBCH may transmit a master information block (MIB).

Lower layer control information may be transmitted on the PDCCH. The lower layer control information may include, for example, downlink control information (DCI) including scheduling information of at least one of the PDSCH and the PUSCH.

Note that, the DCI for scheduling the PDSCH may be called DL assignment, DL DCI, or the like, and the DCI for scheduling the PUSCH may be called UL grant, UL DCI, or the like. Note that, the PDSCH is interchangeable with DL data, and the PUSCH is interchangeable with UL data.

For detection of the PDCCH, a control resource set (CORESET) and a search space may be used. The CORESET corresponds to a resource that searches for DCI. The search space corresponds to a search area and a search method for PDCCH candidates. One CORESET may be associated with one or more search spaces. The UE may monitor the CORESET associated with a certain search space based on search space configuration.

One search space may correspond to a PDCCH candidate corresponding to one or more aggregation levels. One or more search spaces may be called a search space set. Note that the terms "search space", "search space set", "search space configuration", "search space set configuration", "CORESET", "CORESET configuration", and the like in the present disclosure are interchangeable.

Uplink control information (UCI) including at least one of channel state information (CSI), delivery acknowledgement information (which may be called, for example, hybrid automatic repeat request acknowledgement (HARQ-ACK), ACK/NACK, or the like), and scheduling request (SR) may be transmitted on the PUCCH. A random access preamble for establishing connection with a cell may be transmitted on the PRACH.

Note that, in the present disclosure, downlink, uplink, and the like may be expressed without "link". Furthermore, various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) and a secondary synchronization signal (SSS). A signal block including the SS (PSS or SSS) and the PBCH (and the DMRS for the PBCH) may be called an SS/PBCH block, an SS block (SSB), or the like. Note that, the SS, the SSB, or the like may also be called a reference signal.

Furthermore, in the radio communication system 1, a sounding reference signal (SRS), a demodulation reference signal (DMRS), or the like may be transmitted as an uplink reference signal (UL-RS). Note that, DMRS may be called a UE-specific reference signal.

### (Base Station)

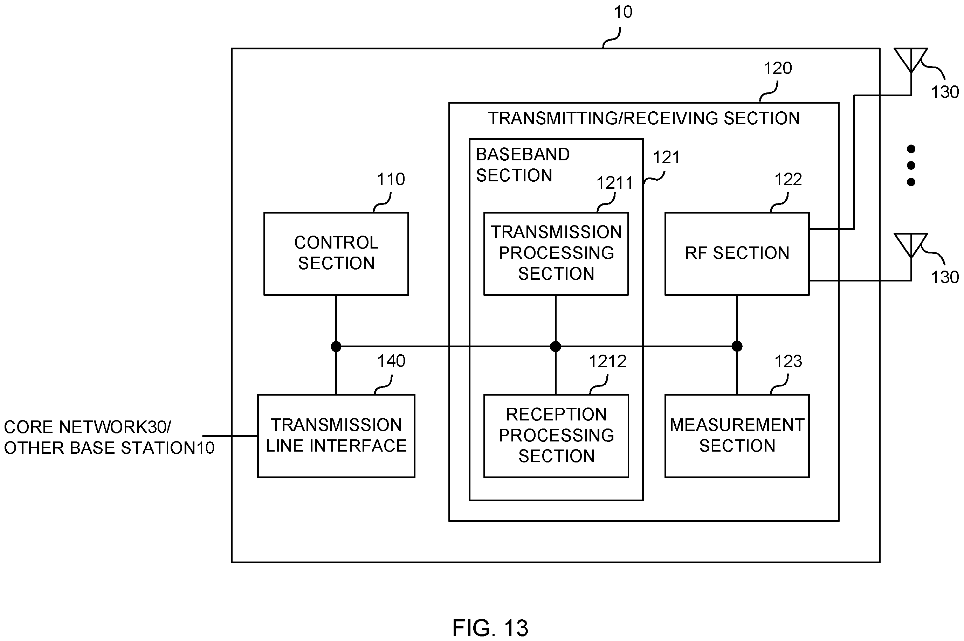

Fig. 13 is a diagram illustrating an example of a configuration of a base station according to one embodiment. The base station 10 includes a control section 110, a transmitting/receiving section 120, a transmitting/receiving antenna 130, and a transmission line interface 140. Note that one or more control sections 110, one or more transmitting/receiving sections 120, one or more transmitting/receiving antennas 130, and one or more transmission line interfaces 140 may be provided.

Note that, although this example mainly describes functional blocks of a characteristic part of the present embodiment, it may be assumed that the base station 10 includes other functional blocks that are necessary for radio communication as well. A part of processing performed by each section described below may be omitted.

The control section 110 controls the entire base station 10. The control section 110 can include a controller, a control circuit, and the like, which are described based on common recognition in the technical field related to the present disclosure.

The control section 110 may control signal generation, scheduling (for example, resource allocation or mapping), and the like. The control section 110 may control transmission/reception, measurement, and the like using the transmitting/receiving section 120, the transmitting/receiving antenna 130, and the transmission line interface 140. The control section 110 may generate data to be transmitted as a signal, control information, a sequence, and the like and may forward the data, the control information, the sequence, and the like to the transmitting/receiving section 120. The control section 110 may perform call processing (such as configuration or releasing) of a communication channel, state management of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a baseband circuit, a filter, a phase shifter, a measurement circuit, a transmission/reception circuit, and the like that are described based on common recognition in the technical field related to the present disclosure.

The transmitting/receiving section 120 may be configured as an integrated transmitting/receiving section or may include a transmitting section and a receiving section. The transmitting section may include a transmission processing section 1211 and the RF section 122. The receiving section may include a reception processing section 1212, the RF section 122, and the measurement section 123.

The transmitting/receiving antenna 130 can include an antenna, which is described based on common recognition in the technical field related to the present disclosure, for example, an array antenna.

The transmitting/receiving section 120 may transmit the above-described downlink channel, a synchronization signal, a downlink reference signal, and the like. The transmitting/receiving section 120 may receive the above-described uplink channel, an uplink reference signal, and the like.

The transmitting/receiving section 120 may form at least one of a transmission beam and a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog conversion on the bit string to be transmitted, to output a baseband signal.

The transmitting/receiving section 120 (RF section 122) may perform modulation to a radio frequency range, filtering processing, amplification, and the like on the baseband signal, and may transmit a signal in the radio frequency range via the transmitting/receiving antenna 130.

Meanwhile, the transmitting/receiving section 120 (RF section 122) may perform amplification, filtering processing, demodulation to a baseband signal, and the like on the signal in the radio frequency range received by the transmitting/receiving antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 120 (measurement section 123) may perform measurement on the received signal. For example, the measurement section 123 may perform radio resource management (RRM) measurement, channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. The measurement result may be output to the control section 110.

The transmission line interface 140 may perform transmission/reception of a signal (backhaul signaling) to/from an apparatus included in the core network 30, another base station 10, or the like and may perform acquisition, transmission, or the like of user data (user plane data), control plane data, and the like for the user terminal 20.

Note that, the transmitting section and the receiving section of the base station 10 in the present disclosure may include at least one of the transmitting/receiving section 120, the transmitting/receiving antenna 130, and the transmission line interface 140.

When the terminal performs communication with one transmission/reception point, the transmitting/receiving section 120 may transmit the configuration of a plurality of candidate serving cells that are non-serving cells to the terminal by higher layer signaling. Then, in a case where the indication indicating any of the plurality of candidate serving cells is received, the serving cell of the terminal is changed to the candidate serving cell indicated by the indication.

### (User Terminal)

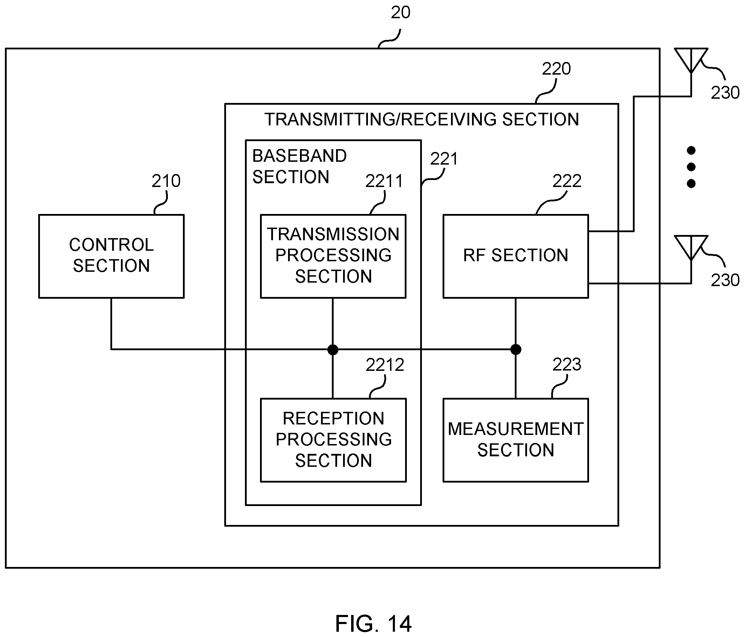

Fig. 14 is a diagram illustrating an example of a configuration of a user terminal according to one embodiment. The user terminal 20 includes a control section 210, a transmitting/receiving section 220, and a transmitting/receiving antenna 230. Note that, one or more control sections 210, one or more transmitting/receiving sections 220, and one or more transmitting/receiving antennas 230 may be included.

Note that, although this example mainly describes functional blocks of a characteristic part of the present embodiment, it may be assumed that the user terminal 20 includes other functional blocks that are necessary for radio communication as well. A part of processing performed by each section described below may be omitted.

The control section 210 controls the entire user terminal 20. The control section 210 can include a controller, a control circuit, and the like that are described based on common recognition in the technical field related to the present disclosure.

The control section 210 may control signal generation, mapping, and the like. The control section 210 may control transmission/reception, measurement, and the like using the transmitting/receiving section 220 and the transmitting/receiving antenna 230. The control section 210 may generate data, control information, a sequence, and the like to be transmitted as signals and may forward the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmission/reception circuit, and the like that are described based on common recognition in the technical field related to the present disclosure.

The transmitting/receiving section 220 may be formed as an integrated transmitting/receiving section or may include a transmitting section and a receiving section. The transmitting section may include the transmission processing section 2211 and the RF section 222. The receiving section may include the reception processing section 2212, the RF section 222, and the measurement section 223.

The transmitting/receiving antenna 230 can include an antenna described based on common recognition in the technical field related to the present disclosure, for example, an array antenna.

The transmitting/receiving section 220 may receive the above-described downlink channel, a synchronization signal, a downlink reference signal, and the like. The transmitting/receiving section 220 may transmit the above-described uplink channel, an uplink reference signal, and the like.

The transmitting/receiving section 220 may form at least one of a transmission beam or a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like on, for example, data, control information, and the like acquired from the control section 210, to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a baseband signal.

Note that, whether or not to apply DFT processing may be determined based on configuration of transform precoding. If transform precoding is enabled for a channel (for example, PUSCH), the transmitting/receiving section 220 (transmission processing section 2211) may perform DFT processing as the transmission processing to transmit the channel by using a DFT-s-OFDM waveform, and if not, DFT processing does not have to be performed as the transmission processing.

The transmitting/receiving section 220 (RF section 222) may perform modulation to a radio frequency range, filtering processing, amplification, and the like on the baseband signal, to transmit a signal in the radio frequency range via the transmitting/receiving antenna 230.

Meanwhile, the transmitting/receiving section 220 (RF section 222) may perform amplification, filtering processing, demodulation to a baseband signal, and the like on the signal in the radio frequency range received by the transmitting/receiving antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmitting section and the receiving section of the user terminal 20 in the present disclosure may be constituted by at least one of the transmitting/receiving section 220 or the transmitting/receiving antenna 230.

When communicating with one transmission/reception point, the transmitting/receiving section 220 may receive configurations of the plurality of candidate serving cells that are non-serving cells by higher layer signaling. The indication may be transmitted by a media access control control element or downlink control information.

In a case where an indication indicating any of the plurality of candidate serving cells is received, the control section 210 may change the serving cell to the candidate serving cell indicated by the indication. When the control section 210 receives the information relating to the quasi-co-location of the non-serving cell, the controller may change the serving cell to the candidate serving cell corresponding to the non-serving cell and apply the quasi-co-location. The control section 210 may simultaneously apply at least two of the configurations of the plurality of candidate serving cells.

### (Hardware Configuration)

Note that the block diagrams that have been used to describe the above embodiments illustrate blocks in functional units. These functional blocks (components) may be implemented in arbitrary combinations of at least one of hardware or software. Further, the method for implementing each functional block is not particularly limited. That is, each functional block may be implemented by using a single apparatus physically or logically aggregated or may be implemented by connecting two or more physically or logically separate apparatuses directly or indirectly (by wire or wirelessly, for example) and using these apparatuses. The functional block may be implemented by combining the one or a plurality of apparatuses with software.

Here, functions include, but are not limited to, deciding, determining, judging, computing, calculating, processing, deriving, investigating, searching, ascertaining, receiving, transmitting, outputting, accessing, resolving, selecting, choosing, establishing, comparing, assuming, expecting, considering, broadcasting, notifying, communicating, forwarding, configuring, reconfiguring, allocating, mapping, assigning, and the like. For example, a functional block (component section) that implements a transmission function may be called a transmitting section (transmitting unit), a transmitter, and the like. In any case, as described above, the implementation method is not particularly limited.

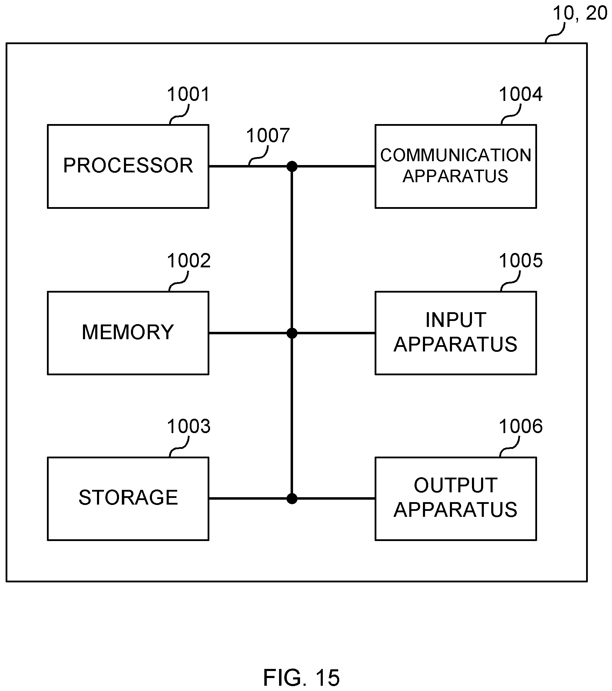

For example, the base station, the user terminal, and the like according to one embodiment of the present disclosure may function as a computer that executes the processing of the radio communication method of the present disclosure. Fig. 15 is a diagram illustrating an example of a hardware configuration of the base station and the user terminal according to one embodiment. Physically, the base station 10 and the user terminal 20 described above may be configured as a computer apparatus that includes a processor 1001, a memory 1002, a storage 1003, a communication apparatus 1004, an input apparatus 1005, an output apparatus 1006, a bus 1007, and the like.

Note that, in the present disclosure, the terms such as an apparatus, a circuit, a device, a section, and a unit are interchangeable. The hardware configuration of the base station 10 and the user terminal 20 may be configured including one or a plurality of the apparatuses illustrated in the drawings or may be configured without including some apparatuses.

For example, although only one processor 1001 is illustrated, there may be a plurality of processors. Further, the processing may be executed by one processor, or the processing may be executed by two or more processors simultaneously or sequentially, or using other methods. Note that, the processor 1001 may be implemented with one or more chips.

For example, each function of the base station 10 and user terminal 20 is implemented by causing predetermined software (program) to be read onto hardware such as the processor 1001 and the memory 1002, so that the processor 1001 performs the arithmetic operation to control communication via the communication apparatus 1004 and controls at least one of reading or writing of data in the memory 1002 and storage 1003.

The processor 1001 may control the whole computer by, for example, running an operating system. The processor 1001 may be implemented by a central processing unit (CPU) including an interface with peripheral equipment, a control apparatus, an operation apparatus, a register, and the like. For example, at least part of the control section 110 (210), the transmitting/receiving section 120 (220), and the like described above may be implemented by the processor 1001.

Furthermore, the processor 1001 reads a program (program code), a software module, data, and the like from at least one of the storage 1003 or the communication apparatus 1004 into the memory 1002, and executes various types of processing in accordance with these. As the program, a program that causes a computer to execute at least a part of the operations described in the above embodiments is used. For example, the control section 110 (210) may be implemented by a control program that is stored in the memory 1002 and operates in the processor 1001, and another functional block may be implemented similarly.

The memory 1002 is a computer-readable recording medium, and may be configured with, for example, at least one of a read only memory (ROM), an erasable programmable ROM (EPROM), an electrically EPROM (EEPROM), a random access memory (RAM), or other appropriate storage media. The memory 1002 may be called a register, a cache, a main memory (primary storage apparatus), and the like. The memory 1002 may store a program (program code), a software module, and the like executable for implementing the radio communication method according to an embodiment of the present disclosure.

The storage 1003 is a computer-readable recording medium and may include, for example, at least one of a flexible disk, a floppy (Registered Trademark) disk, a magneto-optical disk (for example, a compact disc ROM (CD-ROM)), a digital versatile disk, a Blu-ray (Registered Trademark) disk), a removable disk, a hard disk drive, a smart card, a flash memory device (for example, a card, a stick, or a key drive), a magnetic stripe, a database, a server, or other appropriate storage media. The storage 1003 may be called a "secondary storage device".

The communication apparatus 1004 is hardware (transmitting/receiving device) for performing inter-computer communication via at least one of a wired network or a wireless network, and is called, for example, a network device, a network controller, a network card, a communication module, and the like. The communication apparatus 1004 may include a high frequency switch, a duplexer, a filter, a frequency synthesizer, and the like in order to implement, for example, at least one of frequency division duplex (FDD) or time division duplex (TDD). For example, the transmitting/receiving section 120 (220), the transmitting/receiving antenna 130 (230), and the like described above may be implemented by the communication apparatus 1004. The transmitting/receiving section 120 (220) may be implemented by being physically or logically separated into a transmitting section 120a (220a) and a receiving section 120b (220b).

The input apparatus 1005 is an input device for receiving input from the outside (for example, a keyboard, a mouse, a microphone, a switch, a button, a sensor, or the like). The output apparatus 1006 is an output device that performs output to the outside (for example, a display, a speaker, a light emitting diode (LED) lamp, or the like). Note that the input apparatus 1005 and the output apparatus 1006 may have an integrated configuration (for example, a touch panel).

Furthermore, apparatuses such as the processor 1001 and the memory 1002 are connected to each other by the bus 1007 for communicating information. The bus 1007 may be formed by using a single bus or may be formed by using different buses for respective connections between apparatuses.

Further, the base station 10 and the user terminal 20 may be configured to include hardware such as a microprocessor, a digital signal processor (DSP), an application specific integrated circuit (ASIC), a programmable logic device (PLD), or a field programmable gate array (FPGA), and some or all of the functional blocks may be implemented by using the hardware. For example, the processor 1001 may be implemented with at least one of these pieces of hardware.

### (Modifications)

Note that terms described in the present disclosure and terms necessary for understanding the present disclosure may be replaced with terms that have the same or similar meanings. For example, a channel, a symbol, and a signal (signal or signaling) are interchangeable. Further, a signal may be a message. The reference signal can be abbreviated as an RS, and may be called a pilot, a pilot signal, and the like, depending on which standard applies. Further, a component carrier (CC) may be called a cell, a frequency carrier, a carrier frequency, and the like.

A radio frame may include one or a plurality of periods (frames) in a time domain. Each of the one or more periods (frames) that configure the radio frame may be called a subframe. Further, the subframe may include one or more slots in the time domain. The subframe may have a fixed time length (for example, 1 ms) that does not depend on numerology.

Here, the numerology may be a communication parameter that is applied to at least one of transmission and reception of a certain signal or channel. For example, the numerology may indicate at least one of SubCarrier Spacing (SCS), a bandwidth, a symbol length, a cyclic prefix length, a transmission time interval (TTI), the number of symbols per TTI, a radio frame configuration, specific filter processing performed by a transceiver in the frequency domain, or specific windowing processing performed by a transceiver in the time domain.

The slot may include one or more symbols in the time domain (orthogonal frequency division multiplexing (OFDM) symbols, single carrier frequency division multiple access (SC-FDMA) symbols, and the like). Also, a slot may be a time unit based on numerology.

The slot may include a plurality of mini slots. Each mini slot may include one or more symbols in the time domain. Further, the mini slot may be called a sub-slot. Each mini slot may include fewer symbols than slots. A PDSCH (or PUSCH) transmitted in a time unit larger than the mini slot may be called "PDSCH (PUSCH) mapping type A". A PDSCH (or PUSCH) transmitted using the mini slot may be called a PDSCH (PUSCH) mapping type B.

A radio frame, a subframe, a slot, a mini slot, and a symbol all represent a time unit when transmitting a signal. The radio frame, the subframe, the slot, the mini slot, and the symbol may be called by other applicable names, respectively. Note that, time units such as a frame, a subframe, a slot, a mini slot, and a symbol in the present disclosure are interchangeable.

For example, one subframe may be called a TTI, a plurality of consecutive subframes may be called a TTI, or one slot or one mini slot may be called a TTI. That is, at least one of the subframe and the TTI may be a subframe (1 ms) in the existing LTE, may be a period shorter than 1 ms (for example, one to thirteen symbols), or may be a period longer than 1 ms. Note that, the unit indicating the TTI may be called the slot, mini slot, and the like instead of the subframe.

Here, the TTI refers to, for example, the minimum time unit of scheduling in the radio communication. For example, in the LTE system, a base station performs scheduling to allocate radio resources (a frequency bandwidth, transmission power, and the like that can be used in each user terminal) to each user terminal in TTI units. Note that, definition of the TTI is not limited to this.

The TTI may be a transmission time unit of channel-encoded data packet (transport block), code block, codeword, and the like or may be a processing unit of scheduling, link adaptation, and the like. Note that, when the TTI is given, a time interval (for example, the number of symbols) to which the transport block, the code block, the codeword, and the like are actually mapped may be shorter than the corresponding TTI.

Note that, when one slot or one mini slot is called the TTI, one or more TTIs (that is, one or more slots or one or more mini slots) may be the minimum time unit of scheduling. Furthermore, the number of slots (the number of mini slots) forming the minimum time unit of the scheduling may be controlled.

A TTI having a time length of 1 ms may be called a usual TTI (TTI in 3GPP Rel. 8 to 12), a normal TTI, a long TTI, a usual subframe, a normal subframe, a long subframe, a slot, and the like. A TTI that is shorter than the usual TTI may be called a shortened TTI, a short TTI, a partial TTI (or fractional TTI), a shortened subframe, a short subframe, a mini slot, a sub-slot, a slot, and the like.

Note that, long TTI (for example, usual TTI and a subframe) is interchangeable with TTI having a time length longer than 1 ms, and short TTI (for example, shortened TTI) is interchangeable with TTI having a TTI length shorter than the TTI length of the long TTI and a TTI length of 1 ms or longer.

A resource block (RB) is the unit of resource allocation in the time domain and the frequency domain and may include one or more consecutive subcarriers in the frequency domain. The number of subcarriers included in the RB may be the same regardless of the numerology and may be twelve, for example. The number of subcarriers included in the RB may be determined based on the numerology.

Furthermore, the RB may include one or a plurality of symbols in the time domain and have the length of one slot, one mini slot, one subframe, or one TTI. One TTI, one subframe, and the like may include one or a plurality of resource blocks.

Note that one or a plurality of RBs may be called a physical resource block (PRB), a sub-carrier group (SCG), a resource element group (REG), a PRB pair, an RB pair, and the like.

Furthermore, a resource block may include one or a plurality of resource elements (REs). For example, one RE may be a radio resource field of one subcarrier and one symbol.

A bandwidth part (BWP) (which may be called a partial bandwidth, or the like) may represent a subset of consecutive common resource blocks (RBs) for a certain numerology in a certain carrier. Here, the common RB may be specified by the index of the RB based on a common reference point of the corresponding carrier. The PRB may be defined in a certain BWP and numbered within the corresponding BWP.

The BWP may include a UL BWP (BWP for UL) and a DL BWP (BWP for DL). For the UE, one or a plurality of BWPs may be configured within one carrier.

At least one of the configured BWPs may be active, and it is not necessary to assume that the UE transmits and receives a predetermined signal/channel outside the active BWP. Note that, the terms "cell", "carrier", and the like in the present disclosure are interchangeable with "BWP".

Note that the structures of radio frames, subframes, slots, mini slots, symbols, and the like described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the length of cyclic prefix (CP), and the like can be variously changed.

Furthermore, the information and parameters described in the present disclosure may be represented in absolute values, represented in relative values with respect to predetermined values, or represented using other corresponding information. For example, the radio resource may be indicated by a predetermined index.

The names used for the parameters and the like in the present disclosure are not limited names in any respect. Further, any mathematical expression or the like that uses these parameters may differ from those explicitly disclosed in the present disclosure. Because various channels (PUCCH, PDCCH, and the like) and information elements can be identified by any suitable names, various names allocated to these various channels and information elements are not restrictive names in any respect.

The information, signals, and the like described in the present disclosure may be represented using any of various different technologies. For example, data, instruction, a command, information, a signal, a bit, a symbol, a chip, and the like that may be referred to throughout the above description may be represented by a voltage, a current, an electromagnetic wave, a magnetic field, a magnetic particle, a photo field, a photon, or any combination thereof.

Furthermore, the information, signals, and the like may be output in at least one of a direction from a higher layer to a lower layer and a direction from a lower layer to a higher layer. The information, signals, and the like may be input and output via a plurality of network nodes.

The information, signals, and the like that are input and output may be stored in a specific location (for example, in a memory) or may be managed using a management table. The information, signals, and the like to be input and output can be overwritten, updated, or appended. The output information, signals, and the like may be deleted. The information, signals, and the like that are input may be transmitted to other apparatuses.

Notification of information may be performed not only by using the aspects/embodiments described in the present disclosure but also using another method. For example, the notification of information in the present disclosure may be performed by using physical layer signaling (for example, downlink control information (DCI) or uplink control information (UCI)), higher layer signaling (for example, radio resource control (RRC) signaling, broadcast information (master information block (MIB)), system information block (SIB), or the like), or medium access control (MAC) signaling), other signals, or a combination thereof.

Note that the physical layer signaling may be called Layer 1/Layer 2 (L1/L2) control information (L1/L2 control signal), L1 control information (L1 control signal), and the like. Further, the RRC signaling may be called an RRC message and may be, for example, an RRC connection setup message, an RRC connection reconfiguration message, and so on. Further, the MAC signaling may be notified by using, for example, a MAC control element (CE).

Furthermore, notification of predetermined information (for example, notification of "being X") does not necessarily have to be explicit and may be performed implicitly (for example, by not giving notification of the predetermined information or by notification of other information).

Judging may be performed by a one-bit value (0 or 1), by a boolean indicated by true or false, or by comparison of numerical values (for example, comparison with a predetermined value).

Regardless of whether software is called software, firmware, middleware, microcode, or hardware description language or referred to by other names, this should be interpreted broadly, to mean an instruction, an instruction set, a code, a code segment, a program code, a program, a subprogram, a software module, an application, a software application, a software package, a routine, a subroutine, an object, an executable file, an execution thread, a procedure, a function, and the like.

In addition, software, instructions, information, and the like may be transmitted and received via a transmission medium. For example, when software is transmitted from a website, a server, or another remote source by using at least one of a wired technology (coaxial cable, optical fiber cable, twisted pair, digital subscriber line (DSL), or the like) or a wireless technology (infrared rays, microwaves, and the like), at least one of the wired technology or the wireless technology is included within the definition of a transmission medium.

The terms "system" and "network" used in the present disclosure may be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" may be used interchangeably.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station is sometimes called using terms such as a macro cell, a small cell, a femto cell, or a pico cell.

The base station can accommodate one or a plurality of (for example, three) cells. In a case where the base station accommodates a plurality of cells, the entire coverage area of the base station can be partitioned into a plurality of smaller areas, and each smaller area can provide communication services through a base station subsystem (for example, a small base station for indoors (remote radio head (RRH))). The term "cell" or "sector" refers to a part or the entire coverage area of at least one of the base station and the base station subsystem that performs a communication service in this coverage.

As used in the present disclosure, the terms such as "mobile station (MS)", "user terminal", "user equipment (UE)", and "terminal" may be used interchangeably.

A mobile station may be called a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station or the mobile station may be called a transmission apparatus, a reception apparatus, a radio communication apparatus, and the like. Note that at least one of the base station or the mobile station may be a device mounted on a moving body, a moving body itself, and the like. The moving body may be a transportation (for example, a car or an airplane), an unmanned moving body (for example, a drone or an autonomous car), or a (manned or unmanned) robot. Note that at least one of the base station or the mobile station also includes an apparatus that does not necessarily move during a communication operation. For example, at least one of the base station and the mobile station may be an Internet of Things (IoT) device such as a sensor.

Further, a base station in the present disclosure is interchangeable with a user terminal. For example, each aspect/embodiment of the present disclosure may be applied to a configuration in which communication between the base station and the user terminal is replaced with communication among a plurality of user terminals (may be called, for example, device-to-device (D2D) or vehicle-to-everything (V2X)). In this case, the user terminal 20 may have the function of the base station 10 described above. Further, terms such as "uplink" and "downlink" are interchangeable with terms corresponding to communication between terminals (for example, "side"). For example, an uplink channel, a downlink channel, and the like are interchangeable with a side channel.

Similarly, a user terminal in the present disclosure is interchangeable with a base station. In this case, the base station 10 may have the function of the user terminal 20 described above.

In the present disclosure, an operation performed by the base station may also be performed by an upper node thereof in some cases. In a network including one or a plurality of network nodes with base stations, it is clear that various kinds of operations performed for communication with a terminal can be performed by a base station, one or a plurality of network nodes (examples of which include but are not limited to mobility management entity (MME) and serving-gateway (S-GW)) other than the base station, or a combination thereof.

Each aspect/embodiment described in the present disclosure may be used alone, used in a combination, and switched in association with execution. Further, the order of processing procedures, sequences, flowcharts, and the like of the aspects/embodiments described in the present disclosure may be reordered as long as there is no inconsistency. For example, regarding the method described in the present disclosure, elements of various steps are presented using an exemplary order, and the order is not limited to the presented specific order.

Each aspect/embodiment described in the present disclosure may be applied to a system using Long-Term Evolution (LTE), LTE-advanced (LTE-A), LTE-beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (x is, for example, an integer or decimal)), Future Radio Access (FRA), New-Radio Access Technology (RAT), New Radio (NR), New radio access (NX), Future generation radio access (FX), Global System for Mobile communications (GSM (Registered Trademark)), CDMA 2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), or another appropriate radio communication method, a next generation system expanded based on the foregoing, and the like. Further, a plurality of systems may be combined (for example, a combination of LTE or LTE-A and 5G, and the like) and applied.

The term "based on" used in the present disclosure does not mean "only based on" unless otherwise specified. In other words, the term "based on" means both "only based on" and "at least based on".

Reference to elements with designations such as "first", "second", and the like used in the present disclosure does not generally limit the quantity or order of those elements. These designations can be used in the present disclosure, as a convenient way of distinguishing between two or more elements. Thus, the reference to the first and second elements does not mean that only two elements may be adopted nor that the first element must precede the second element in a certain manner.

The term "determining" used in the present disclosure may include a wide variety of operations. For example, with respect to the "determining", judging, calculating, computing, processing, deriving, investigating, looking up, search, inquiry (for example, looking up in a table, database, or another data structure), ascertaining, and the like may be regarded as "determining".

Furthermore, with respect to the "determining", receiving (for example, receiving information), transmitting (for example, transmitting information), input, output, accessing (for example, accessing to data in a memory), and the like may be regarded as "determining".

Furthermore, with respect to the "determining", resolving, selecting, choosing, establishing, comparing, and the like may be regarded as "determining". In other words, with respect to the "determining", any kind of operation may be regarded as "determining".

Furthermore, the term "determining" is interchangeable with "assuming", "expecting", "considering", and the like.

The terms "connected" and "coupled", or any variation thereof used in the present disclosure mean all direct or indirect connections or coupling between two or more elements and can include the presence of one or more intermediate elements between the two elements that are "connected" or "coupled" to each other. The coupling or connection between the elements may be physical, logical, or a combination of these. For example, the term "connection" is interchangeable with "access".

In the present disclosure, when two elements are connected, these elements can be considered to be "connected" or "coupled" to each other by using one or more electrical wires, cables, printed electrical connections, and the like, and by using, as some nonlimiting and non-inclusive examples, electromagnetic energy, and the like having a wavelength in the radio frequency domain, the microwave domain, and the optical (both visible and invisible) domain.

In the present disclosure, the phrase "A and B are different" may mean that "A and B are different from each other". Note that the corresponding phrase may mean that "A and B each are different from C". The terms such as "separated", "coupled", and the like may be interpreted in a similar manner to that of "being different".

In a case where terms such as "include", "including", and variations of these are used in the present disclosure, these terms are intended to be inclusive like the term "comprising" is. Moreover, the term "or" used in the present disclosure is intended not to be exclusive-OR.

In the present disclosure, for example, in a case where translations add articles, such as a, an, and the in English, the present disclosure may include that a noun that follows these articles is in a plural form.

Although the invention according to the present disclosure has been described in detail above, it is obvious to a person skilled in the art that the invention according to the present disclosure is by no means limited to the embodiments described in the present disclosure. The invention according to the present disclosure can be embodied with various corrections and in various modified aspects, without departing from the spirit and scope of the invention defined based on the description of claims. Consequently, the description of the present disclosure is provided only for the purpose of explaining examples, and should by no means be construed to limit the invention according to the present disclosure in any way.

## Claims

1. A terminal comprising:
a receiving section that receives configurations of a plurality of candidate serving cells that are non-serving cells by higher layer signaling in a case of performing communication with one transmission/reception point; and
a control section that changes a serving cell to a candidate serving cell indicated by an indication in a case where the indication indicating any of the plurality of candidate serving cells is received.

2. The terminal according to claim 1, wherein
the indication is transmitted by a media access control control element or downlink control information.

3. The terminal according to claim 1, wherein,
in a case where information relating to a quasi-co-location of the non-serving cell is received, the control section changes the serving cell to the candidate serving cell corresponding to the non-serving cell and applies the quasi-co-location.

4. The terminal according to claim 1, wherein
the control section simultaneously applies at least two of the configurations of the plurality of candidate serving cells.

5. A radio communication method of a terminal, comprising:
a step of receiving configurations of a plurality of candidate serving cells that are non-serving cells by higher layer signaling in a case of performing communication with one transmission/reception point; and
a step of changing a serving cell to a candidate serving cell indicated by an indication in a case where the indication indicating any of the plurality of candidate serving cells is received.

6. A base station comprising:
a transmitting section that transmits configurations of a plurality of candidate serving cells that are non-serving cells by higher layer signaling to a terminal in a case where the terminal performs communication with one transmission/reception point, wherein
a serving cell of the terminal is changed to a candidate serving cell indicated by an indication in a case where the indication indicating any of the plurality of candidate serving cells is received.
